# EUROPEAN PATENT APPLICATION

(11) **EP 1 510 916 A2**
(43) Date of publication of application: **02.03.2005**
(21) Application number: 04017313.0
(22) Date of filing: 22.07.2004
(51) Int. Cl.: G06F 9/455, G06F 9/445

(54) **Industrial apparatus, display device and communication system**

(30) Priority: 07.08.2003 JP 2003288831
(71) Applicant: Kabushiki Kaisha Toyota Jidoshokki, Kariya-shi, Aichi-ken 448-8671 (JP)
(72) Inventor: Ito, Toru c/o Kabushiki Kaisha Toyota Jidoshokki, Kariya-shi Aichi-ken (JP); Arakawa, Akio c/o Kabushiki K. Toyota Jidoshokki, Kariya-shi Aichi-ken (JP)
(74) Representative: HOFFMANN - EITLE

(57) **Abstract**

A Java applet (21) or a dummy Java applet (23) is incorporated into a homepage screen (20 or 22) that is initially displayed, and a Java VM is launched soon after power to the display setting unit (4) is turned on. After that, the Java VM is kept running until the power to the display setting unit (4) is turned off.

## Description

### BACKGROUND OF THE INVENTION

### 1. Field of the Invention

The present invention relates to an industrial apparatus, a display device, and a communication system which respectively send/receive data through a network, and more particularly to an operational setting for a Java (registered trademark) Virtual Machine (Java VM).

### 2. Description of the Related Art

As techniques involving the Internet and World Wide Web (WWW) undergo recent development, industrial apparatuses including a loom are provided with a Web server and a Web browser, and connected to a network such as a Local Area Network (LAN) as network devices (see, for example, JP 2003-5825 A, pp. 3 to 6 and Figs. 1 to 4).

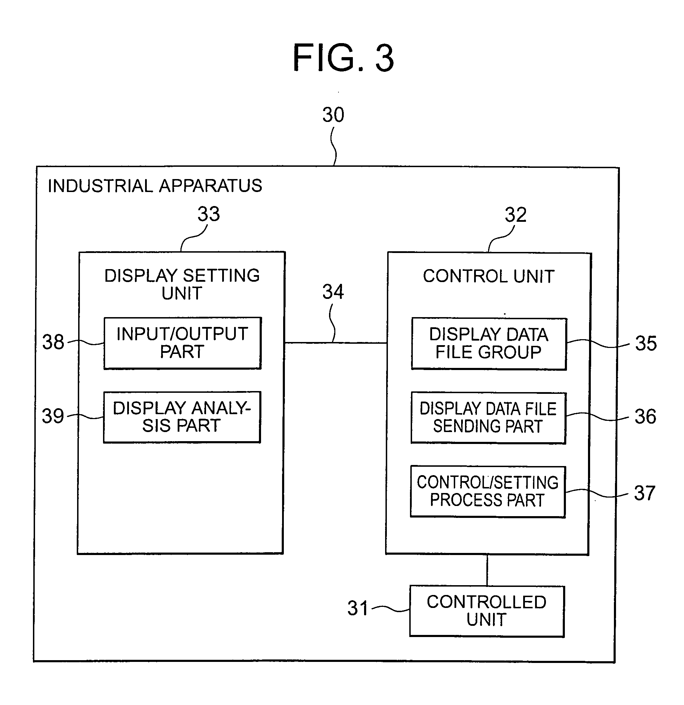

Fig. 3 is a diagram schematically showing a configuration of a conventional industrial apparatus.

As shown in Fig. 3, an industrial apparatus 30 includes: a control unit 32 having a function of performing a setting process and a control on a controlled unit 31 for performing work processing, measurement, inspection, or the like; and a display setting unit 33 serving as an interface to an operator. The control unit 32 and the display setting unit 33 are connected to each other through a network 34.

The control unit 32 includes: a display data file group 35 that records data files described using a standardized markup language such as a HyperText Markup Language (HTML) or an extensible Markup Language (XML) and files including image data associated with the data files; a display data file sending part 36 for sending data within the display data file group 35 corresponding to a request from the display setting unit 33 to the display setting unit 33; and a control/setting process part 37 for performing a setting process and a control on the controlled unit 31 according to an instruction from the display setting unit 33.

The display setting unit 33 includes: an input/output part 38 formed of a liquid crystal flat panel or touch panel; and a display analysis part 39 for analyzing data sent from the control unit 32 to generate display data to be outputted through the input/output part 38.

First, the control unit 32 extracts data corresponding to a request from the display setting unit 33 from within the display data file group 35, and sends the data from the display data file sending part 36 to the display setting unit 33 through the network 34.

Then, the display setting unit 33 causes the display analysis part 39 to analyze the data sent from the control unit 32 to generate display data, and outputs the display data through the input/output part 38.

Note that in addition to an HTML or an XML, a Java applet may be used as a possible page markup language for the display data outputted through the input/output part 38.

However, a general Java VM running on the display setting unit 33 of the industrial apparatus 30, including the case of running on a general-purpose computer such as a personal computer, starts a launch process when the necessity arises as in a case of executing a Java applet, and automatically performs an end process when the necessity disappears as in a case of ending the Java applet.

The launch process and the end process of the Java VM are thus performed every time the Java applet is executed and ended, so that the execution of the Java applet is delayed by the time required for the launch process and the end process of the Java VM, thereby leading to a problem of reduction in operability of the industrial apparatus 30 or the general-purpose computer.

### SUMMARY OF THE INVENTION

Therefore, the present invention has an object to provide an industrial apparatus, a display device, and a communication system which are respectively capable of preventing reduction in operability thereof even when a Java applet is used.

In order to solve the above-mentioned problem, the present invention adopts the following configuration.

That is, an industrial apparatus according to the present invention includes a control unit for controlling a controlled unit and a display setting unit for sending/receiving data to/from the control unit through a network, and is characterized in that: the control unit includes: a recording part for recording a plurality of data; and a first send/receive part for receiving request data sent from the display setting unit and sending to the display setting unit, based on the request data, predetermined data extracted from the plurality of data recorded in the recording part; the display setting unit includes: a second send/receive part for sending the request data to the control unit and receiving the predetermined data from the control unit; a display data generating part for launching a Java VM if a Java applet is contained in the predetermined data received by the second send/receive part, and using the Java VM to generate display data from the Java applet; and an output part for outputting the display data generated by the display data generating part; and the Java VM is in a standby state so as to be able to execute a Java applet on subsequent occasions, and does not stop operating even after the Java applet stops operating.

### BRIEF DESCRIPTION OF THE DRAWINGS

In the accompanying drawings:
Fig. 1 is a diagram schematically showing a configuration of an industrial apparatus according to an embodiment of the present invention;
Figs. 2A and 2B each show an example of a homepage screen that is initially displayed on an input/output part; and
Fig. 3 is a diagram schematically showing a configuration of a conventional industrial apparatus.

### DETAILED DESCRIPTION OF THE PREFERRED EMBODIMENT

Hereinafter, description will be made of an embodiment of the present invention with reference to the drawings.

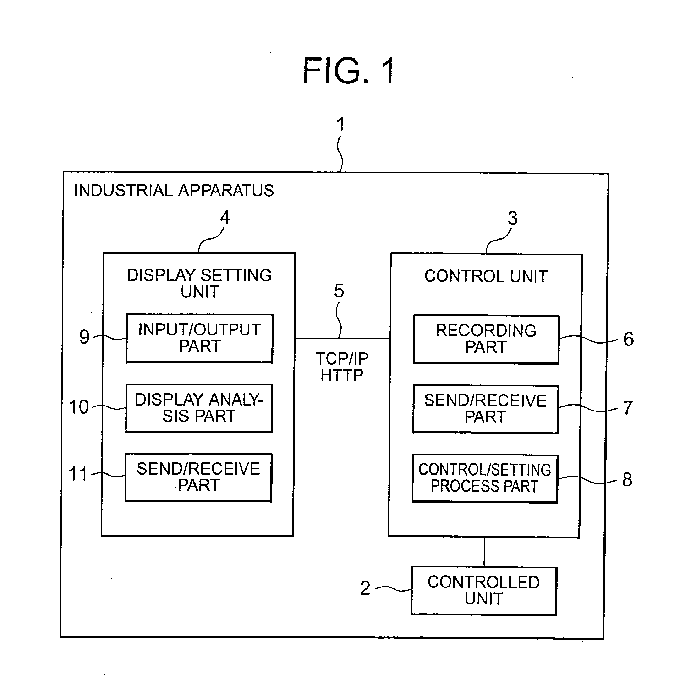

Fig. 1 is a diagram schematically showing a configuration of an industrial apparatus according to the embodiment of the present invention.

As shown in Fig. 1, an industrial apparatus 1 includes: a control unit 3 having a function of performing a setting process and a control on a controlled unit 2 (for example, a loom or the like) for performing processing, measurement, inspection, or the like; and a display setting unit 4 (display device) having an interface function to an operator. The control unit 3 and the display setting unit 4 are connected to each other through a network 5. Note that, for example, a Transmission Control Protocol/Internet Protocol (TCP/IP) or the like may be used for connection between the control unit 3 and the display setting unit 4, and a HyperText Transfer Protocol (HTTP) or the like may be used for sending data from the control unit 3 to the display setting unit 4.

The control unit 3 includes: a recording part 6 that records data described using an HTML or an XML, data containing a Java applet described using a Java, and image data associated with those data; a send/receive part 7 (first send/receive part) for receiving request data from the display setting unit 4 and sending data within the recording part 6 corresponding to the request data to the display setting unit 4; and a control/setting process part 8 for performing a setting process and a control on the controlled unit 2 according to an instruction from the display setting unit 4.

The display setting unit 4 includes: an input/output part 9 (output part) formed of a liquid crystal flat panel or touch panel; a display analysis part 10 (display data generating part) for analyzing data sent from the control unit 3 to generate display data to be outputted through the input/output part 9; and a send/receive part 11 (second send/receive part, or receive part) for sending the request data to the control unit 3 and receiving the data sent from the control unit 3.

First, the display setting unit 4 sends request data generated by an operator operating the input/output part 9 from the send/receive part 11 to the control unit 3 through the network 5.

The control unit 3 extracts data corresponding to the request data received by the send/receive part 7 from the recording part 6, and sends the data from the send/receive part 7 to the display setting unit 4 through the network 5.

Then, the display setting unit 4 causes the display analysis part 10 to analyze the data received by the send/receive part 11 to generate display data, and outputs the display data through the input/output part 9. After that, for example, when a Java applet is contained in the data received by the send/receive part 11, the display analysis part 10 launches a Java VM and uses the Java VM to generate display data from the Java applet.

It is a feature of the industrial apparatus 1 according to this embodiment that once the Java VM is launched, the Java VM is kept running until power to the display setting unit 4 is turned off.

Next, description will be made of an example operation of the display setting unit 4.
(1) The power to the display setting unit 4 is first turned on.
(2) Then, an Operating System (OS) is booted. Note that there is no limitation on the particular type of OS.
(3) When the OS is booted, a Java VM is unconditionally launched. Instead, such a setting may be adopted that the Java VM is unconditionally launched when the power to the display setting unit 4 is turned on.
(4) When the Java VM becomes necessary such as when a Web browser reads a Java applet, the Java applet is instantaneously executed by the Java VM that has already been launched.
(5) Even when the Java VM becomes unnecessary such as when the Java applet stops operating, the Java VM goes on standby in that state without stopping operating.
(6) After that, the operations of (4) and (5) are repeated until the power to the display setting unit 4 is turned off to maintain an environment where the Java applet can instantaneously be executed.

Therefore, once the Java VM is launched, the Java VM is not ended even when the Java applet is ended, thereby eliminating the time required for launching and ending the Java VM when the Java applet is executed and ended on subsequent occasions. Accordingly, the time required for executing the Java applet is reduced on the subsequent occasions, so that operability of the industrial apparatus 1 can be prevented from deteriorating when a Java applet is used.

Further, as an example of a hardware configuration for implementing the display setting unit 4, there is given a possible configuration including a Central Processing Unit (CPU), a memory, an external storage device, a medium drive, an input/output device (the input/output part 9), and a network connection device (the send/receive part 11), which are connected with one another through a bus.

Examples of the memory include a Read Only Memory (ROM) and a Random Access Memory (RAM), and the memory stores a program (for example, a Web browser or a Java VM) used for processes, data (for example, HTML data, XML data, or a Java applet), and the like.

The CPU executes a program by use of the memory to perform a necessary process such as one for launching a Web browser or a Java VM.

Possible examples of the external storage device include a magnetic disk device, an optical disk device, and a magneto-optical disk device. For example, an operator may record in advance a Web browser or a Java VM in the external storage device, and when necessary, load the program in the memory for use.

The medium drive drives a transportable recording medium to access recorded contents thereof.

Examples of the transportable recording medium used include recording mediums readable by any computers, such as a memory card, a flexible disk, a Compact Disk Read Only Memory (CD-ROM) , an optical disk, and a magneto-optical disk. For example, an operator may store in advance HTML data, XML data, or a Java applet in the transportable recording medium, and when necessary, load the data in the memory to execute a Web browser or the a Java VM.

Further, as an example of a hardware configuration for implementing the control unit 3, there is given a possible configuration including the CPU, the memory, the external storage device, and the network connection device (send/receive part 7), which are connected with one another through a bus.

Note that the control unit 3 and the display setting unit 4 may be configured to be included within the industrial apparatus 1 as described above, but may be configured as, for example, a server machine and a terminal device through a network, in which the server machine includes functions equivalent to the recording part 6 and the send/receive part 7 and the terminal device includes functions equivalent to the input/output part 9, the display analysis part 10, and the send/receive part 11. Further, the terminal device may be composed, for example, of a general-purpose computer such as a personal computer.

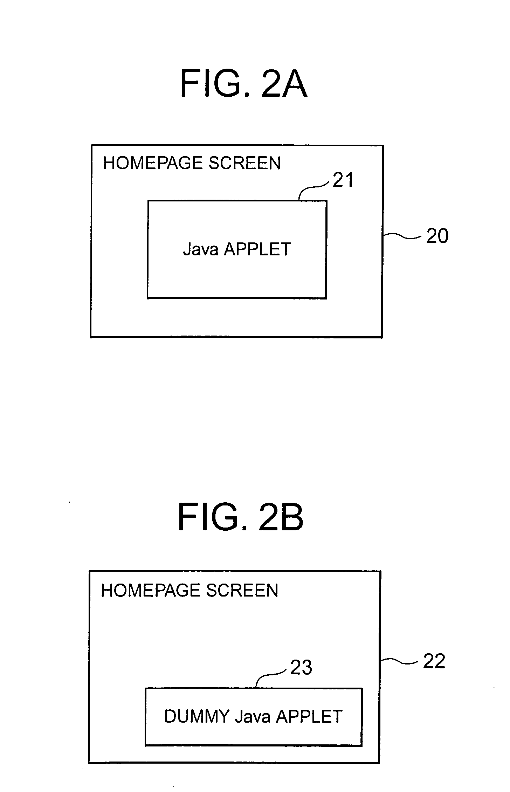

Fig. 2A shows an example of a homepage screen that is initially displayed on the input/output part 9 after the power to the display setting unit 4 is turned on.

As shown in Fig. 2A, a Java applet 21 is incorporated into a homepage screen 20 that is initially displayed, so that a Java VM can be launched soon after the power to the display setting unit 4 is turned on. More specifically, when the power to the display setting unit 4 is turned on, an OS, a Web browser, and the Java VM are automatically launched in this respective order. Accordingly, by incorporating the Java applet 21 into the homepage screen 20 that is initially displayed, the Java VM can be launched in an early stage.

Fig. 2B shows another example of a homepage screen that is initially displayed on the input/output part 9 after the power to the display setting unit 4 is turned on.

As shown in Fig. 2B, a dummy Java applet 23 that executes no particular operation is incorporated into a homepage screen 22 that is initially displayed, so that a Java VM can be launched soon after the power to the display setting unit 4 is turned on. More specifically, similarly to the case of Fig. 2A, when the power to the display setting unit 4 is turned on, an OS, a Web browser, and the Java VM are automatically launched in the stated order. Accordingly, by incorporating the dummy Java applet 23 into the homepage screen 22 that is initially displayed, the Java VM can be launched in an early stage even in the case where there is no need to use a Java applet on the homepage screen 22 that is initially displayed. Note that an arrangement may be adopted in which the dummy Java applet 23 appears on a corner of the homepage screen 22 that is initially displayed, or has a minimum size on the homepage screen 22 that is initially displayed.

## Claims

1. An industrial apparatus comprising a control unit for controlling a controlled unit and a display setting unit for sending/receiving data to/from the control unit through a network, **characterized in that**:
the control unit comprises:
a recording part for recording a plurality of data; and
a first send/receive part for receiving request data sent from the display setting unit and sending to the display setting unit, based on the request data, predetermined data extracted from the plurality of data recorded in the recording part;
the display setting unit comprises:
a second send/receive part for sending the request data to the control unit and receiving the predetermined data from the control unit;
a display data generating part for launching a Java VM if a Java applet is contained in the predetermined data received by the second send/receive part, and using the Java VM to generate display data from the Java applet; and
an output part for outputting the display data generated by the display data generating part; and
the Java VM is in a standby state so as to be able to execute a Java applet on subsequent occasions, and does not stop operating even after the Java applet stops operating.

2. An industrial apparatus according to claim 1, **characterized in that**:
if a dummy Java applet is contained in the predetermined data received by the second send/receive part, the display data generating part launches the Java VM; and
the Java VM is in a standby state so as to be able to execute a Java applet on subsequent occasions, and does not stop operating even after the Java applet stops operating.

3. An industrial apparatus according to claim 1 or 2, **characterized in that** a screen based on the Java applet or a dummy Java applet is arranged on a homepage screen that is initially outputted to the output part.

4. A display device comprising:
a receive part for receiving data through a network;
a display data generating part for launching a Java VM if a Java applet is contained in the data received by the receive part, and using the Java VM to generate display data from the Java applet; and
an output part for outputting the display data generated by the display data generating part,
**characterized in that** the Java VM is in a standby state so as to be able to execute a Java applet on subsequent occasions, and does not stop operating even after the Java applet stops operating.

5. A display device according to claim 4, **characterized in that**:
if a dummy Java applet is contained in the data received by the receive part, the display data generating part launches the Java VM; and
the Java VM is in a standby state so as to be able to execute a Java applet on subsequent occasions, and does not stop operating even after the Java applet stops operating.

6. A display device according to claim 4 or 5, **characterized in that** a screen based on the Java applet or a dummy Java applet is arranged on a homepage screen that is initially outputted to the output part.

7. A display device comprising:
a receive part for receiving a Java applet through a network;
a display data generating part for launching a Java VM when power to the display device is turned on or an OS is booted, and using the Java VM to generate display data from the Java applet; and
an output part for outputting the display data generated by the display data generating part,
**characterized in that** the Java VM is in a standby state so as to be able to execute a Java applet on subsequent occasions, and does not stop operating even after the Java applet stops operating.

8. A communication system comprising a server machine and a terminal device for sending/receiving data to/from the server machine through a network, **characterized in that**:
the server machine comprises:
a recording part for recording a plurality of data; and
a first send/receive part for receiving request data sent from the terminal device and sending to the terminal device, based on the request data, predetermined data extracted from the plurality of data recorded in the recording part;
the terminal device comprises:
a second send/receive part for sending the request data to the server machine and receiving the predetermined data from the server machine;
a display data generating part for launching a Java VM if a Java applet is contained in the predetermined data received by the second send/receive part, and using the Java VM to generate display data from the Java applet; and
the Java VM is in a standby state so as to be able to execute a Java applet on subsequent occasions, and does not stop operating even after the Java applet stops operating.
